# EUROPÄISCHE PATENTSCHRIFT

(11) **EP 3 681 309 B1**
(45) Veröffentlichungstag und Bekanntmachung des Hinweises auf die Patenterteilung: **07.08.2024**
(21) Anmeldenummer: 18781968.5
(22) Anmeldetag: 11.09.2018
(51) Int. Cl.: A23K 10/30, A23K 20/147, A23J 1/14, C11B 1/10, C11B 1/08, A23K 50/40

(54) **PROTEINZUTAT AUS ÖLSAMEN VON SONNENBLUMEN ODER RAPS UND DEREN HERSTELLUNG**
PROTEIN INGREDIENT MADE FROM OILSEEDS OF SUNFLOWERS OR RAPE, AND THE PRODUCTION THEREOF
COMPLÉMENT PROTÉIQUE ISSU DE GRAINES OLÉAGINEUSES DE TOURNESOL OU DE COLZA ET FABRICATION ASSOCIÉE

(30) Priorität: 11.09.2017 DE 102017120906
(43) Veröffentlichungstag der Anmeldung: 22.07.2020
(73) Patentinhaber: Fraunhofer-Gesellschaft zur Förderung der angewandten Forschung e.V., 80686 München (DE)
(72) Erfinder: EISNER, Peter, 85354 Freising (DE); MITTERMAIER, Stephanie, 85368 Moosburg a. d. Isar (DE); OSEN, Raffael, 85354 Freising (DE); DOER, Gabriele, 85354 Freising (DE); MARTIN, Anna, 93468 Miltach (DE)
(74) Vertreter: Gagel, Roland
(86) Internationale Anmeldenummer: PCT/EP2018/074408
(87) Internationale Veröffentlichungsnummer: WO 2019/048696

(56) Entgegenhaltungen:
- EP-A1- 2 885 980
- EP-A2- 2 400 859
- US-A- 4 219 469
- US-A- 4 219 470
- LIN M J Y ET AL: "CERTAIN FUNCTIONAL PROPERTIES OF SUNFLOWER MEAL PRODUCTS", vol. 39, no. 2, 1 January 1974 (1974-01-01), pages 1 - 3, XP002590913, ISSN: 0022-1147, Retrieved from the Internet <URL:http://www3.interscience.wiley.com/cgi-bin/fulltext/119662970/PDFSTART?CRETRY=1&SRETRY=0> [retrieved on 20100807]

## Beschreibung

### Anwendungsgebiet

Die Erfindung betrifft ein Verfahren zur Gewinnung von Proteinzutaten aus Samen von Sonnenblumen oder Raps zum Einsatz in Futtermitteln, technischen Hilfsstoffen oder Lebensmitteln sowie mit dem Verfahren hergestellte Proteinzutaten und Futtermittel, die diese Zutaten enthalten.

### Stand der Technik

Vor dem Hintergrund einer zunehmenden Weltbevölkerung und knapper werdender Flächen und Ressourcen gewinnen pflanzliche Proteinpräparate für die Ernährung des Menschen, für technische Applikationen und für den Einsatz als Tierfutter immer mehr an Bedeutung. Die mit dem weltweit steigenden Wohlstand einhergehende zunehmende Nachfrage nach tierischen Lebensmitteln führt zu einem steigenden Bedarf an ernährungsphysiologisch optimierten Proteinpräparaten, die vor allem von Tieren weitgehend vollständig metabolisiert und die einfach und kostengünstig bereitgestellt werden können. Hier zeigen bestehende Futtermittelzutaten zum Teil noch erhebliche Schwächen.

Futtermittel mit pflanzlichen Zutaten haben eine große Bedeutung für die Produktion von tierischen Lebensmitteln. Sie dienen der Versorgung der Tiere mit Proteinen, Kohlenhydraten, Lipiden und Mikronährstoffen. Besonders wichtig für das Wachstum der Tiere sind die biologische Wertigkeit und Bioverfügbarkeit der in den Futtermitteln enthaltenen Proteine und Aminosäuren. Auch ökonomisch ist die Proteinfraktion in Futtermitteln von hoher Relevanz, da diese Fraktion einen bedeutenden Anteil der Kosten verursacht.

Als pflanzliche Proteinpräparate für Tierfutter sind am Markt hauptsächlich Sojabohnen, Sojaextraktionsschrote, Sojaproteinpräparate oder Getreidemehle und Getreideproteinpräparate im Einsatz. Daneben werden Proteine aus anderen Leguminosen, wie z.B. Erbsen, Ackerbohnen und Lupinen eingesetzt, zudem werden proteinreiche Reststoffe der Lebensmittelverarbeitung wie z.B. Biertreber verfüttert.

Eine kostengünstige Quelle für Futtermittelproteine sind Press- und Extraktionsrückstände aus der Gewinnung von Speiseöl aus den Samen von Sonnenblumen und Raps. Diese Samen sind gekennzeichnet durch eine feste Schale mit überwiegend dunkler Pigmentierung und durch ein ölhaltiges Fruchtfleisch. Ein Schälen dieser Samen ist möglich, jedoch besonders bei Rapssamen verfahrenstechnisch sehr aufwändig. Unter Schalen werden in der vorliegenden Patentanmeldung alle Bestandteile der Samen zusammengefasst, die nicht Kotyledonen oder Keimling umfassen, so z.B. neben der Zellulose-reichen Testa auch weitere Hüllen im Samen wie z.B. das Silberhäutchen.

Sonnenblumensamen enthalten bis zu 50 Mass.-% Öl und im Mittel rund 18 Mass.-% Protein. Rapssamen enthalten bis zu 45 Mass.-% Öl und bis zu 25 Mass.-% Protein. Durch Pressen der Samen und Extrahieren des Presskuchens mit Hilfe von organischen Lösemitteln kann der Ölgehalt im Extraktionsrückstand auf unter 3,5 Mass.-% reduziert (Soxhlet-Methode) und der Proteingehalt je nach Rohstoff auf über 40 Mass.-% gesteigert werden. Damit bieten sich diese Rückstände als proteinreiche Zutaten für Futtermittel an.

Die bei der Ölgewinnung anfallenden Press- und Extraktionsrückstände werden schon heute in der Futtermittelindustrie eingesetzt. Jedoch ist ihr Einsatz trotz des hohen Proteingehalts stark begrenzt. Dies wird in der Literatur unter anderem damit begründet, dass die Proteinverdaubarkeit und -verfügbarkeit durch die hohen Prozesstemperaturen bei der Ölgewinnung und einem damit einhergehendem Verlust essentieller Aminosäuren wie Lysin, Methionin oder Cystein reduziert ist (Björck, I. & Asp, N.G. (1983). The effects of extrusion cooking onnutritional value - a literature review. Journal of Food Engineering,2, 281-308). Die Verdaubarkeit der Proteine von heiß behandelten Press- und Extraktionsrückständen kann dabei in Einzelfällen auf unter 40 % reduziert sein (Geoff L. Allan, Scott Parkinson, Mark A. Booth, David A.J. Stone, Stuart J. Rowland, Jane Frances, Rebecca Warner-Smith. Replacement of fish meal in diets for Australian silver perch, Bidyanus bidyanus: I. Digestibility of alternative ingredients. Aquaculture 186 _2000. 293-310.; Brett Glencross, Wayne Hawkins & John Curnow. Nutritional assessment of Australian canola meals. I. Evaluation of canola oil extraction method and meal processing conditions on the digestible value of canola meals fed to the red seabream (Pagrus auratus,Paulin). Aquaculture Research, 2004, 35, 15-24). Das bedeutet, dass deutlich weniger als die Hälfte der verfütterten Proteine von den Tieren metabolisiert werden können.

Weiterhin wird beschrieben, dass der Anteil störender Begleitstoffe, vor allem der Anteil sekundärer Pflanzenstoffe wie z.B. Polyphenole, Tannine, Glucosinolate oder Phytinsäure in diesen Rückständen bis zu 10 Mass.-% betragen kann und dass diese Verbindungen die Verdaubarkeit des Futters ebenfalls beeinträchtigen. Zudem reduzieren einige sekundäre Pflanzenstoffe nicht nur die Aufnahme von Makro- und Mikronährstoffen aus dem Futtermittel sondern weisen zudem einen bitteren Geschmack und eine adstringierende Wirkung auf. Der daraus resultierende sensorische Eindruck des Futtermittels führt bei Nutztieren und hier besonders bei Schweinen und Rindern häufig zur Ablehnung. Überdies können durch sekundäre Pflanzenstoffe aus Raps oder Sonnenblumen auch Folgeprodukte wie Eier geschmacklich negativ beeinflusst werden. So kann zum Beispiel Sinapin, das in Rapssamen enthalten ist, beim Einsatz von Raps-Extraktionsrückständen in Futtermitteln zu einem fischigen Aroma in Eiern von Legehennen führen.

Sonnenblumen- und Rapssamen werden nach Stand der Technik mit dem Fokus auf eine hohe Ölausbeute verarbeitet. Dabei werden sie zunächst von Besatz befreit, teilweise konditioniert (Einstellung einer definierten Temperatur und Feuchte), dann durch Pressen mechanisch vorentölt (Restölgehalte maximal 10 Mass.-%) und anschließend der Restölgehalt mit Hexan aus den Presskuchen extrahiert. Auch eine sog. Fertigpressung bis auf Restölgehalte von ca. 5 Mass.-% ohne nachfolgende Extraktion wird durchgeführt, wobei der Restölgehalt in den Presskuchen die Lagerstabilität der Rückstände reduziert.

Nach Stand der Technik werden Sonnenblumen- und Rapssamen überwiegend ungeschält oder teilgeschält gepresst. Bei der Teilschälung verbleiben über 45 Mass.-% der in den Samen enthaltenen Schalen vor der Entölung im Rohstoff, was im Mittel einem Restschalengehalt vor der Pressung von >10 Mass.-% bei Sonnenblumensamen und >8 Mass.-% bei Rapssamen entspricht. Insbesondere zur Pressung, d.h. Fertigpressung oder Vorpressung als Teilentölung, wird nach Stand der Technik ein Schalenanteil von mindestens 10 Mass.-% als notwendig erachtet, um die Drainage des Öls aus der Presse zu erleichtern und damit die Pressgeschwindigkeit zu erhöhen. Eine hohe Geschwindigkeit der Verarbeitung ist insbesondere bei Tierfutter von großer Bedeutung, da für Tierfutter keine hohen Preise erzielt werden können, so dass ein langwieriger Pressvorgang eine profitable Verwertung der Presskuchen als Tierfutter unmöglich machen würde.

Die aus nicht- oder teilgeschälten Samen gewonnenen Presskuchen und Schrote sind nach einer schnellen und heißen Verarbeitung meist dunkel gefärbt, haben einen sehr hohen Rohfasergehalt von bis zu 44 Mass.-% und einen bitteradstringierenden Geschmack. Sie eignen sich daher nicht zur Herstellung von hochwertigen Proteinmehlen für Applikationen außerhalb des niedrigpreisigen Tierfuttersektors und weisen eine schlechte Verdaubarkeit auf, was sich auf die Hitzeschädigung der Proteine zurückführen lässt. Sie eignen sich durch die Anwesenheit von sekundären Pflanzenstoffen nur für die Fütterung weniger Tierarten.

Seit einigen Jahren gibt es auch Ansätze, um Proteine aus den Rückständen der Sonnenblumen- oder Rapsölgewinnung zu Proteinmehlen oder -kontentraten aufzubereiten und sie somit für Lebensmittel- und hochwertige Futtermittelapplikationen nutzbar zu machen. Die Entfernung von störenden Polyphenolen, hauptsächlich Chlorogensäure, Sinapin oder Sinapinsäure, die den Geschmack von Sonnenblumen- bzw. Rapsproteinisolaten beeinträchtigen, sowie von Glucosinolaten steht dabei im Vordergrund.

Hierfür werden bislang Extraktionen mit unterschiedlichen Lösungsmitteln, darunter auch Wasser mit unterschiedlichen pH-Werten und Mischungen aus Alkoholen und Wasser zur Entfernung der Polyphenole aus entölten Sonnenblumen- und Rapsschroten vorgeschlagen. Dabei wurden zur Entfernung der phenolischen Substanzen aus entfetteten Sonnenblumenkernen insbesondere Butanol in unterschiedlichen Anteilen mit salzsaurem Wasser, Ethanol mit einem Anteil von 95 % (v/v), Isopropanol (70 % v/v) und Methanol (80 % v/v). Nachteilig bei der Extraktion mit diesen Lösemitteln ist die weitgehende Denaturierung der Proteine durch die Lösemittelbehandlung, so dass die Proteinlöslichkeit stark herabgesetzt wird. Zudem wird die Proteinverfügbarkeit durch chemische Reaktion von Aminosäuren deutlich reduziert.

Weitere Veröffentlichungen beschreiben die Herstellung von Proteinkonzentraten aus Raps- und Sonnenblumensamen. Diese Proteinkonzentrate werden durch trocken- oder nasstechnische Aufbereitung gewonnen, wobei das Protein im Rückstand verbleibt. Der hohe Anteil an unerwünschten Begleitstoffen (sekundäre Pflanzenstoffe) und der hohe Rohfasergehalt schränken ihre Verwendung als Futtermittel jedoch ein, so dass ein besonderer Vorteil im Vergleich zu den Sonnenblumen- und Rapsextraktionsschroten nicht erkennbar wird. Die meisten Proteinkonzentrate haben daher eine beschränkte Applikationsbreite und sind nur in geringen Konzentrationen in Futtermitteln einsetzbar.

In der EP 2 885 980 B1 wird ein Verfahren zur Gewinnung von Sonnenblumenprotein als proteinreiches Futtermittel beschrieben. Zur Herstellung des Futtermittels werden geschälte Sonnenblumenkerne mit einem Restschalengehalt von >5 Mass.-% eingesetzt. Es erfolgt eine Pressung der Saat auf einen Ölgehalt ≥8 Mass.-% bis ≤18 Mass.-% und einen Proteingehalt von ≥30% bis ≤45%, bezogen auf Trockenmasse. Auf den Einfluss des Restschalengehalts ≤5Mass.-% auf die Verdaubarkeit der Proteine wird nicht eingegangen. Zudem ist auch hier davon auszugehen, dass der hohe Rohfasergehalt und der hohe Chlorogensäuregehalt des Produkts dessen Akzeptanz und damit dessen Verwertbarkeit als Futtermittel stark einschränken werden.

Die EP 2 400 859 A2 beschreibt ebenso ein Verfahren zur Herstellung von Proteinpräparaten aus geschälten Sonnenblumenkernen mit einem Restschalengehalt ≤ 5 Mass.-%. Diese betrifft die Herstellung von Proteinpräparaten zum Einsatz in Nahrungsmitteln. Aufgrund des niedrigen Restschalengehaltes ist ein hoher Proteingehalt des entölten Produktes von über 45 Mass.-% erzielbar. Durch die niedrigen Temperaturen durch Pressung bei unter 80°C und Desolventierung bei unter 90 °C wird mit diesem Verfahren erreicht, dass gute technofunktionelle Eigenschaften erhalten bleiben, ein geringer Denaturierungsgrad vorliegt und damit eine sehr gute Verdaubarkeit und Bioverfügbarkeit gegeben sein sollten. Aufgrund der niedrigen Temperaturen im Verlauf der Verarbeitung der Sonnenblumensamen ergeben sich aber sehr lange Verweilzeiten in den einzelnen Prozessstufen und daraus resultierend sehr hohe Kosten für den gesamten Prozess. Dies schränkt die Anwendbarkeit der Präparate im Tierfutterbereich und auch im Bereich der Herstellung kostengünstiger Lebensmittel deutlich ein.

Die Aufgabe der vorliegenden Erfindung besteht darin, ein Verfahren zur Herstellung von qualitativ hochwertigen Proteinzutaten aus Sonnenblumen- oder Rapssamen bereitzustellen, die aufgrund von geringen Gehalten an sekundären Pflanzenstoffen und Fasern eine gute Verdaubarkeit der Proteine aufweisen, sensorisch ansprechend sind und zudem durch ihren hohen Proteingehalt und den weitgehenden Erhalt der Proteineigenschaften ernährungsphysiologisch wertvoll und damit vielseitig in Futtermitteln einsetzbar sind.

### Beschreibung der Erfindung

Diese Aufgabe wird mit dem Verfahren nach Anspruch 1 gelöst. Die weiteren Ansprüche geben bevorzugte Ausführungsformen des Verfahrens, ein mit dem Verfahren herstellbare Proteinzutaten und deren bevorzugte Anwendung in Futtermitteln an.

Bei dem vorliegenden Verfahren zur Gewinnung hochwertiger Proteinzutaten aus Sonnenblumen- und Rapssamen werden die Samen zunächst geschält und die Schalen, vorzugsweise durch Sieben, Sichten und Sortieren, vom Kernfleisch separiert, so dass sich ein Schalengehalt von <2,5 Mass.-%, vorteilhaft <1 Mass.-%, besonders vorteilhaft <0,25 Mass.-% ergibt.

Zur Veränderung der Proteinlöslichkeit mit dem Ziel des Erreichens von Denaturierungseffekten im Protein ist im Verlauf der Verarbeitungsschritte der geschälten Kerne bis zum entölten Proteinpräparat (Pressen, Extrahieren, Desolventieren und ggf. Vermahlen) mindestens eine Protein-denaturierende Behandlung vorzunehmen, um eine Denaturierung der in der Proteinzutat enthaltenen Proteine zu einem Anteil von > 40% zu erreichen. Hierunter wird entweder eine Temperatur-Zeit Belastung verstanden, die dadurch gekennzeichnet ist, dass die Sonnenblumen- oder Rapsproteine im Verlauf der Verarbeitung für mindestens 10 Minuten, vorteilhaft für über 30 Minuten mit einer Temperatur von über 90°C, vorteilhaft über 100°C, vorteilhaft über 110°C, besonders vorteilhaft über 120 °C und unter 150 °C belastet werden. Eine andere erfindungsgemäße Protein-denaturierende Behandlung kann, auch zusätzlich zur Temperatur-Zeit Belastung, in Form einer wässrig-alkoholischen Behandlung des Proteins erfolgen bei einem Massenverhältnis aus Alkohol und Wasser zwischen 1:20 bis 20:1 und einer Temperatur oberhalb von 40°C, besser oberhalb von 50 °C. Als Alkohol kommen vorteilhaft einwertige Alkohole wie Methanol, Ethanol, Propanol, Isopropanol oder Butanol zum Einsatz.

Mit dieser Protein-denaturierenden Behandlung nach einer weitgehenden Schälung wird sichergestellt, dass für die Anwendung in Tierfutter nur ein sehr geringer Schalen-Faseranteil im extrahierten Presskuchen enthalten ist, andere störende Begleitstoffe reduziert wurden und gleichzeitig die Proteine aufgrund der (partiellen) Denaturierung fest in die verbleibende Kohlenhydrat-Matrix des Kerns eingebunden werden, was Proteinverluste entlang der Wertschöpfungskette des Proteinpräparats bis zur Verfütterung deutlich reduziert. Damit kann beispielsweise erreicht werden, dass sich die Proteine bei der Fütterung an Fische im Gewässer nur sehr langsam aus dem Proteinpräparat auflösen und somit nur geringe Verluste über wässrige Phasen in die Umgebung auftreten.

Für die weitere Verarbeitung nach dem Schälen werden die geschälten Samen, vorzugsweise nach einer Konditionierung durch Einstellung von Temperatur und Feuchte, mittels Pressen auf einen Ölgehalt von <25 Mass.-% , vorteilhaft <15 Mass.-% besonders vorteilhaft <10 Mass.-%, aber >6 Mass.-%, vorteilhaft >9 Mass.-%, gepresst und anschließend der durch diese mechanische Teilentölung erhaltene Presskuchen mittels Extraktionsmittel (z.B. Hexan, Ethanol, überkritisches CO₂, Ethylacetat oder Mischungen daraus) bis auf einen Ölgehalt (bestimmt nach der Soxhlet-Methode) von kleiner 3,5 Mass.-%, vorteilhaft kleiner 2 Mass.-% entölt.

In einer bevorzugten Ausgestaltung sollte die Temperatur während der Pressung zumindest in Teilen des Produkts einen Wert von 75 °C übersteigen, vorteilhaft wird eine Temperatur von über 85 °C beim Pressen im Presskuchen erreicht, besonders vorteilhaft über 95 °C. Dies kann bspw. durch Erhitzen der Presse, durch Vorwärmen der Kerne oder durch hohe Scherkräfte und Drücke in der Presse erreicht werden. Dies führt zu einem deutlichen Ansteigen der Entölungsgeschwindigkeit, zu einer Denaturierung der Proteine und zu einer Verfestigung der Pressrückstände. Die bei erhöhten Temperaturen auftretende Verfestigung der Pressrückstände hat zur Folge, dass im Verlauf des Transports der Rückstände zwischen den einzelnen Prozessstufen der Entölung oder in der nachfolgenden ÖlExtraktion weniger Abrieb entsteht, dadurch weniger Verluste auftreten und auch weniger Probleme bei der Aufbereitung der Miscella (Öl-Lösemittel-Mischung) entstehen, da weniger Feinabrieb-Partikel über die Miscella vom Proteinpräparat abgetrennt werden. Somit werden durch die erfindungsgemäße Pressung die Verluste durch Abrieb reduziert und der Prozess wirtschaftlicher. Dabei wird durch entsprechend hohe Temperaturen bspw. eine Festigkeit bzw. ein Bruchdruck in den Presskuchen erreicht, der oberhalb von 10 N/mm² für einen runden Presskuchenstrang mit 8 mm Durchmesser liegt, gemessen mittels Texture Analyzer (TA) bei einer radialen Druckbeanspruchung.

Nach der Extraktion der vorgepressten Ölsamen mit Lösemitteln, die direkt mit dem Presskuchen oder nach einer weitergehenden mechanischen Behandlung des Presskuchens (z.B. Vermahlung und Pelletierung) durchgeführt werden sollte, erfolgt die vorzugsweise destillative Abtrennung des Lösemittels durch Desolventierung, vorzugsweise unter Wärmezufuhr in Form von überhitzten organischen Lösemitteln und/oder durch Einsatz von Wasserdampf. Für die Desolventierung sollte in einer vorteilhaften Ausgestaltung des erfindungsgemäßen Verfahrens eine Temperatur von >90 °C gewählt werden. Vorteilhaft wird eine Temperatur über 100 °C, besonders vorteilhaft über 120 °C und unter 150 °C in den Wärmeträgermedien eingestellt. Dabei wird eine weitere Denaturierung der Proteine erreicht, die bei über 40% liegt, vorteilhaft über 70%, besonders vorteilhaft über 90%. Die Denaturierung des Proteins wird mittels DSC-Methode bestimmt, wie z.B. in der EP 2 400 859 A2 beschrieben. Bei der Bestimmung der Denaturierung wird hierbei die DSC Peakfläche (Enthalpie) im Vergleich zur Peakfläche in unbehandelten Samen normiert auf Proteinanteil bestimmt. Die Denaturierung dem Flächenverlust, d.h. 100% Denaturierung zeigt keine Fläche mehr.

Das hohe Maß an Denaturierung und die daraus resultierende verringerte Löslichkeit des Sonnenblumen- oder Rapsproteins lassen eine im Vergleich zu nativen Proteinen reduzierte Bioverfügbarkeit und minderwertige Futtermitteleigenschaften erwarten, wie es von Extraktionsrückständen nach Stand der Technik bekannt ist (S. Gonzalez-Perez, 2007: Sunflower proteins: overview of their physicochemical, structural and functional properties.Journal of the Science of Food and Agriculture 87(12); A. Moure et al. ,2006: Functionality of oilseed protein products: A review, Food Research International, Volume 39, Issue 9). Bei Einsatz einer denaturierten Proteinzutat nach der erfindungsgemäßen Behandlung zeigt sich im Tierversuch, beispielsweise beim Einsatz in der Fütterung von Forellen, aber überraschenderweise, dass trotz einer Absenkung der Proteinlöslichkeit bei pH 7 auf unter 40% und einer Denaturierung von über 60% dennoch die Proteinverdaubarkeit mit z.T. über 80% sehr viel höher ist, als die von Extraktionsrückständen nach Stand der Technik. Auch Extraktionsrückstände nach Stand der Technik haben eine geringe Löslichkeit und eine hohe Denaturierung, weisen aber stets einen Schalenanteil über 10 Mass.-% auf.

Zur Bestimmung der Verdaubarkeit werden hierbei Fische mit Versuchsrationen gefüttert und der Kot durch Abstreifen gewonnen. Die Verdaubarkeiten werden nach den NRC-Empfehlungen berechnet (National Research Council. 2011. Nutrient Requirements of Fish and Shrimp. Washington, DC: The National Academies Press. https://doi.org/10.17226/13039).

So scheint sich die Reduktion des Schalenanteils in den Extraktionsrückständen überproportional auf die Verdaubarkeit der Proteine in Fütterungstests auszuwirken. Dabei sollte ein Schalenanteil im Rückstand nach der Entölung von unter 5 Mass.-% angestrebt werden, eine Reduktion auf unter 2 Mass.-%, vorteilhaft unter 0,5 Mass.-% an Schalen bringt dabei nochmals deutliche Vorteile in der Verdaubarkeit. Dieser geringe Schalenanteil wird beim vorgeschlagenen Verfahren durch Bereitstellen von geschälten Sonnenblumen- oder Rapssamen mit einem Schalengehalt von <2,5 Mass.-%, vorteilhaft <1 Mass.-%, besonders bevorzugt <0,25 Mass.-% für die mechanische Teilentölung erreicht, da die Extraktionsrückstände aus Raps- oder Sonnenblumensamen nach der Entölung nur etwa 50% der Masse der Raps- und Sonnenblumensamen entsprechen.

Damit bietet sich der Einsatz der erfindungsgemäßen Proteinpräparate aus Raps- oder Sonnenblumensamen als hochwertiger Ersatz für tierische Proteine wie zum Beispiel Fischmehl, Tierkörpermehl, Blutmehl oder Federnmehl an. Austauschraten von 35% bis vorteilhaft 60%, noch vorteilhafter bis 80%, besonders vorteilhaft bis zu 100% von tierischen Mehlen durch die erfindungsgemäße Proteinzutat erscheinen sinnvoll und möglich. Eine derartige Substitution bis hin zu einem weitgehenden Ersatz tierischer Komponenten im Futtermittel ist sowohl aus Gründen der Nachhaltigkeit als auch wirtschaftlich von großem Vorteil.

Durch das erfindungsgemäße Verfahren ist trotz der weitgehenden Proteindenaturierung aufgrund der hohen Temperaturen eine sehr gute Verdaubarkeit des Proteins gewährleistet. Dies zeigt sich auch, wenn bei dem beschriebenen Verfahren mit dem Ziel der Abtrennung geschmacklich aktiver und teilweise antinutritiver sekundärer Pflanzenstoffe (z.B. Polyphenole) eine Behandlung mit Alkohol-Wasser-Mischungen nachgeschaltet wird. Trotz einer noch weitergehenden Denaturierung der Proteine auf über 80% durch diesen Verfahrensschritt bleibt die Verdaubarkeit nahezu unverändert. In Versuchen zeigt sich, dass diese Proteinzutaten aus Raps oder Sonnenblume eingesetzt als Futtermittel zu einer vergleichsweise hohen Gewichtszunahme der Tiere führen wie konventionelle Futtermittel mit gleichem Proteingehalt. Es erscheint daher besonders wertvoll im Sinne guter Futtermitteleigenschaften, nach der Entölung eine Alkohol-Wasser-Extraktion nachzuschalten.

Besondere Vorteile ergeben sich zudem, wenn der Denaturierungsschritt nicht gleich zu Beginn der Behandlung, also während des Pressens erfolgt, sondern wenn zunächst eine schonende Pressung bei einer mittleren Temperatur der Kernfraktion über der Dauer des Pressvorgangs unter 80 °C, vorteilhaft unter 70 °C durchgeführt wird, auch die ÖlExtraktion unter 80 °C erfolgt und dann eine thermische Denaturierung durch eine hohe Temperatur beim Desolventieren >100 °C, vorteilhaft >120 °C durchgeführt wird. Es kann auch sinnvoll sein, auf den thermischen Schritt >100 °C nach der Entölung zu verzichten und eine erhöhte Temperatur >100 °C erst dann einzusetzen, nachdem eine Behandlung des Proteins mit einer Alkohol-Wasser-Mischung erfolgt ist. Damit kann das Protein noch wirkungsvoller denaturiert werden.

### Eigenschaften Rapsprotein

Eine mit dem Verfahren hergestellte Proteinzutat aus Rapssamen weist erfindungsgemäß die folgenden Eigenschaften auf (die analytischen Methoden sind u.a. in EP 2 400 859 A2 beschrieben):
- Hexangehalt zwischen 0,0001 und 2 Mass-% und/oder
- Alkoholgehalt zwischen 0,0001 und 2 Mass-%
- Proteingehalt >45 Mass.-% und kleiner 80 Mass.-% (bestimmt mit Dumas N*6,25)
- Fettgehalt <3,5 Mass.-% (bestimmt mit Hexan im Soxhlet)
- Proteinlöslichkeit <40 %, vorteilhaft <25 %, besonders vorteilhaft <20 % (Methode nach Morr et al. 1985 und Bestimmung des NSI)
- Schalenanteil kleiner 5 Mass.-%, vorteilhaft <2 Mass.-%, besonders vorteilhaft <0,5 Mass.-%,
- Denaturierung des Proteins: >40 %, vorteilhaft >70 %, besonders vorteilhaft >80 %,(bestimmt mittels DSC)
- Verdaubarkeit des Proteins: >60%, vorteilhaft >80%

### Eigenschaften Sonnenblumenprotein

Eine mit dem Verfahren hergestellte Proteinzutat aus Sonnenblumensamen, weist erfindungsgemäß die folgenden Eigenschaften auf (bestimmt mit den gleichen Bestimmungsmethoden wie bei dem Rapsprotein):
- Hexangehalt zwischen 0,0001 und 2 Mass-% und/oder
- Alkoholgehalt zwischen 0,0001 und 2 Mass-%
- Proteingehalt > 45 Mass.-% und < 80 Mass.-% (bestimmt mit Dumas N*6,25)
- Fettgehalt <3,5 Mass.-% (Bestimmung mit Soxhlet-Methode)
- Proteinlöslichkeit <30 %, vorteilhaft <25 %, oder <20 %
- Schalenanteil kleiner 5 Mass.-%, vorteilhaft <2 Mass.-%, besonders vorteilhaft <0,5 Mass.-%,
- Denaturierung des Proteins: >40 %, vorteilhaft >70 %, besonders vorteilhaft >80 %,
- Verdaubarkeit der Proteine: >70%, vorteilhaft >85%

Ein erfindungsgemäßes Proteinpräparat aus Sonnenblumen kann aufgrund der guten Verdaubarkeit in Futtermitteln in deutlich höheren Konzentrationen anstelle der tierischen Proteinquelle (z.B. (Fischmehl, Blutmehl, Federnmehl etc.) eingesetzt werden als dies mit Rückständen aus der Sonnenblumenölgewinnung nach Stand der Technik möglich ist, auch wenn noch Spuren an organischen Lösemitteln im Futtermittel nachweisbar sind.

In Fütterungsversuchen kann der Anteil des Präparates aus Sonnenblumensamen bis zu 50% der tierischen Komponenten in konventionellem Futter ersetzen, ohne deutliche Einbußen im Tierwachstum hinnehmen zu müssen. Auch im Falle von Rapssamen ist ein vergleichsweise hoher Ersatz tierischer Komponenten möglich, hier liegt die Limitierung bei 45% im Futtermittel nach einfacher Entölung der Rapskomponente mittels Hexan. Nach weitergehender Behandlung mit Alkohol-Wasser-Mischungen kann der Ersatz tierischer Komponenten durch Ölsamenzutaten auf bis zu 60% angehoben werden und liefert noch immer wirtschaftlich sinnvolle Wachstumsraten.

Somit ist es möglich, ein Futtermittel mit hohen Substitutionsraten tierischer Komponenten durch die erfindungsgemäßen Proteinpräparate bereitzustellen. Erfindungsgemäße Futtermittel aus Rapssamen ermöglichen mehr als 30% Substitutionsraten durch die erfindungsgemäßen Proteinzutaten aus Raps, besonders vorteilhaft mehr als 40%, besonders vorteilhaft mehr als 45%. Erfindungsgemäße Futtermittel aus Sonnenblumensamen ermöglichen mehr als 30% Substitutionsraten durch die erfindungsgemäßen Proteinzutaten aus Sonnenblumen, besonders vorteilhaft mehr als 40%, besonders vorteilhaft mehr als 50%.

In einer besonders vorteilhaften Ausgestaltung eines erfindungsgemäßen Futtermittels für karnivore Tiere (z.B. Lachs, Forelle) werden tierische Bestandteile zu 100% durch ein erfindungsgemäßes Präparat aus Sonnenblumensamen mit einem Schalenanteil <3,5 Mass.-% ersetzt. Dabei zeigen sich Einbußen im Tierwachstum von bis 20% und eine geringere Verdaubarkeit im Vergleich zu tierischen Proteinzutaten. Dennoch zeigt sich überraschenderweise, dass die mit diesen Futtermitteln gefütterten Tiere trotz geringerer Körpermasse und geringerem Muskelprotein eine sehr hohe Verbraucherakzeptanz genießen. Es ist daher vorteilhaft, trotz der reduzierten Futtermittelwertigkeit auf den Zusatz von tierischen Bestandteilen zu verzichten und die möglichen Defizite über den Einsatz spezieller Aminosäuren- oder Vitamin- und Mineralstoff-Mischungen auszugleichen und die möglichen Defizite über den Einsatz spezieller Aminosäuren- oder Vitamin- und Mineralstoff-Mischungen auszugleichen.

Für den Einsatz in Futtermitteln ist es hilfreich, die erfindungsgemäßen Proteinzutaten mit weiteren Zutaten zu vermischen wie Vitaminen, Mineralstoffen, Aminosäuren/ und/oder Proteinen, sensorischen Zusatzstoffen (Farb- und Aromastoffe), zootechnischen Zusatzstoffen (Enzyme, Präbiotika, ...), technologischen Zusatzstoffen (z.B. Bindemittel, Säureregulatoren, ...) sowie Ölen.

In einer vorteilhaften Ausgestaltung des Einsatzes der erfindungsgemäßen Proteinzutat als Futtermittel wird die Zutat aus Sonnenblumen mit Sojaprotein gemischt für die Anwendung als Tierfutter eingesetzt. Das Protein-Mischungsverhältnis liegt dabei vorteilhaft zwischen 1:10 und 10:1, besonders vorteilhaft zwischen 30:70 und 70:30 sehr vorteilhaft bei 50:50 bezogen auf den Proteingehalt. Es zeigt sich, dass überraschenderweise bei Einsatz sowohl von Sonnenblume als auch von Soja ein gutes Wachstum erreicht werden kann, das aufgrund der beschriebenen Eigenschaften des Sonnenblumenpräparates besonders hoch ausfällt.

### Ausführungsbeispiel:

Zur Herstellung einer Zutat aus Sonnenblumenkernen wurden diese bis zu einem Restschalengehalt von <1 Mass.-% geschält und nach Einstellen einer Feuchte von 5 Mass.-% in den geschälten Sonnenblumenkerne in einer Schneckenpresse bei 95 °C auf einen Restfettgehalt von 10 Mass.-% entölt. Anschließend erfolgten zwei unterschiedliche Schritte zur mechanischen Nachbehandlung des Presskuchens zur Verbesserung der Ölextraktion einmal durch Flockieren und einmal durch Pelletieren nach einer Vermahlung.

Es erfolgte eine Nachentölung mit Hexan auf einen Restfettgehalt von 2 Mass.-% und Desolventierung des Hexans für 20 Minuten mit Wasserdampf, der auf eine Temperatur von 120 °C eingestellt wurde. Im Anschluss daran erfolgte eine Extraktion mit EtOH-Wasser im Mischungsverhältnis von 50-50 nach Masse für 1 Stunde. Die erneute Desolventierung des EtOH-Wasser-Gemischs erfolgte wiederum mit 120 °C heißem Wasserdampf. Anschließend wurden die Proben analysenfein vermahlen. Die dabei anfallenden Zutaten hatten eine Proteinlöslichkeit von 25% und eine Denaturierung von 85%. Im Folgenden erfolgte eine Mischung mit Sojaprotein im Verhältnis 20 Mass-% Sonnenblumenprotein zu 80 Mass-% Sojaprotein und ein Zusatz dieser Mischung in Lachsfuttermittel.

## Patentansprüche

1. Verfahren zur Gewinnung von Proteinzutaten für Futtermittel aus Samen von Sonnenblumen oder Raps, mit wenigstens folgenden Schritten
- Schälen der Sonnenblumen- oder Rapssamen bis auf einen Schalengehalt <2,5 Mass.-%, um geschälte Sonnenblumen- oder Rapssamen zu erhalten, oder Bereitstellen von geschälten Sonnenblumen- oder Rapssamen mit einem Schalengehalt von <2,5 Mass.-%;
- mechanische Teilentölung der geschälten Sonnenblumen- oder Rapssamen durch Pressen bis auf einen Fett- oder Ölgehalt im Bereich zwischen >6 und <25 Mass.-%;
- Durchführung wenigstens eines Extraktionsschrittes zur weiteren Entölung der Sonnenblumen- oder Rapssamen mit mindestens einem organischen Lösungsmittel oder überkritischem CO2 bis auf einen Ölgehalt von kleiner 3,5 Mass.-%, und
- anschließende Desolventierung, wodurch ein proteinhaltiges Produkt als Proteinzutat für Futtermittel erhalten wird,
- wobei zwischen dem Schälen der Sonnenblumen- oder Rapssamen und dem Erhalt der Proteinzutat wenigstens eine Protein-denaturierende Behandlung der Sonnenblumen- oder Rapssamen so durchgeführt wird, dass in der Proteinzutat enthaltene Proteine zu einem Anteil von > 40% denaturiert sind.

2. Verfahren nach Anspruch 1,
**dadurch gekennzeichnet,**
**dass** die Protein-denaturierende Behandlung durch eine Temperatur-Zeit Belastung erfolgt, bei der Proteine der Sonnenblumen- oder Rapssamen für mindestens 10 Minuten (vorteilhaft für über 30 Minuten) mit einer Temperatur von über 90°C, vorzugsweise > 100°C, und unter 150 °C belastet werden.

3. Verfahren nach Anspruch 1 oder 2,
**dadurch gekennzeichnet,**
**dass** die mechanische Teilentölung der geschälten Sonnenblumen- oder Rapssamen durch Pressen bei einer mittleren Temperatur der geschälten Sonnenblumen- oder Rapssamen über der Dauer des Pressvorgangs von unter 80 °C und auch der wenigstens eine Extraktionsschritt bei einer Temperatur von unter 80 °C erfolgen,
und **dass** die Protein-denaturierende Behandlung durch eine hohe Temperatur von >100 °C bei der Desolventierung durchgeführt wird.

4. Verfahren nach Anspruch 1 oder 2,
**dadurch gekennzeichnet,**
**dass** die Protein-denaturierende Behandlung durch eine wässrig-alkoholische Behandlung von Proteinen der Sonnenblumen- oder Rapssamen bei einem Massenverhältnis aus Alkohol und Wasser zwischen 1:20 und 20:1 und einer Temperatur oberhalb von 40°C erfolgt.

5. Verfahren nach einem der Ansprüche 1, 2 und 4,
**dadurch gekennzeichnet,**
**dass** die mechanische Teilentölung der geschälten Sonnenblumen- oder Rapssamen durch Pressen bei einer mittleren Temperatur der geschälten Sonnenblumen- oder Rapssamen über der Dauer des Pressvorgangs von unter 80 °C, der wenigstens eine Extraktionsschritt bei einer Temperatur von unter 80 °C und die Desolventierung bei einer Temperatur von unter 100 °C erfolgen,
und **dass** nach der Desolventierung eine Behandlung von Proteinen der Sonnenblumen- oder Rapssamen mit einer Alkohol-Wasser-Mischung erfolgt und anschließend die Proteine auf eine Temperatur von > 100°C gebracht werden.

6. Verfahren nach einem der Ansprüche 1 bis 4,
**dadurch gekennzeichnet,**
**dass** die Desolventierung durch destillative Abtrennung des Lösungsmittels erfolgt, insbesondere unter Wärmezufuhr mittels einem oder mehreren überhitzten organischen Lösemitteln und/oder durch Einsatz von Wasserdampf.

7. Verfahren nach einem der Ansprüche 1 bis 4 oder 6,
**dadurch gekennzeichnet,**
**dass** für die Desolventierung eine Temperatur von > 90 °C, bevorzugt > 100 °C, und unter 150 °C gewählt wird.

8. Verfahren nach einem der Ansprüche 1 bis 7,
**dadurch gekennzeichnet,**
**dass** die mechanische Teilentölung so durchgeführt wird, dass eine Temperatur der geschälten Sonnenblumen- oder Rapssamen während der mechanischen Teilentölung einen Wert von 75°C übersteigt.

9. Verfahren nach Anspruch 8,
**dadurch gekennzeichnet,**
**dass** die Temperatur so hoch gewählt wird, dass ein durch die mechanische Teilentölung erhaltener Presskuchen einen Bruchdruck aufweist, der oberhalb von 10 N/mm² liegt.

10. Verfahren nach einem der Ansprüche 1 bis 9,
**dadurch gekennzeichnet,**
**dass** zwischen der mechanischen Teilentölung und dem wenigstens einen Extraktionsschritt eine mechanische Behandlung eines durch die mechanische Teilentölung erhaltenen Presskuchens erfolgt.

11. Proteinzutat für Futtermittel, die aus Proteinen von Rapssamen erhalten ist und
- einen Lösungsmittelgehalt, insbesondere Hexangehalt, zwischen 0,0001 und 2 Mass-% und/oder einen Alkoholgehalt zwischen 0,0001 und 2 Mass-%,
- einen Proteingehalt von >45 Mass.-% und <80 Mass.-%,
- einen Fettgehalt von <3,5 Mass.-%,
- eine Proteinlöslichkeit von <40 %,
- einen Schalenanteil kleiner 5 Mass.-%, vorteilhaft <2 Mass.-%, besonders vorteilhaft <0,5 Mass.-%,
- eine Denaturierung der Proteine von >40 %, und
- eine Verdaubarkeit der Proteine von >60 %, bestimmt nach dem in der Beschreibung angegebenen Verfahren und diesbezüglichen NRC-Empfehlungen,
aufweist.

12. Proteinzutat für Futtermittel, die aus Proteinen von Sonnenblumensamen erhalten ist und
- einen Lösungsmittelgehalt, insbesondere Hexangehalt, zwischen 0,0001 und 2 Mass-% und/oder einen Alkoholgehalt zwischen 0,0001 und 2 Mass-%,
- einen Proteingehalt von >45 Mass.-% und <80 Mass.-%,
- einen Fettgehalt von <3,5 Mass.-%,
- eine Proteinlöslichkeit von <30 %,
- einen Schalenanteil kleiner 5 Mass.-%, vorteilhaft <2 Mass.-%, besonders vorteilhaft <0,5 Mass.-%,
- eine Denaturierung der Proteine von >40 %, und
- eine Verdaubarkeit der Proteine von >70 %, bestimmt nach dem in der Beschreibung angegebenen Verfahren und diesbezüglichen NRC-Empfehlungen,
aufweist.

13. Proteinzutat für Futtermittel, die eine Mischung von Sojaproteinen mit einer Proteinzutat nach Anspruch 12 enthält.

14. Proteinzutat nach Anspruch 13,
**dadurch gekennzeichnet,**
**dass** ein Protein-Mischungsverhältnis zwischen den Sojaproteinen und den Proteinen der Proteinzutat zwischen 1:10 und 10:1, vorteilhaft zwischen 30:70 und 70:30, besonders vorteilhaft bei 50:50 bezogen auf den Proteingehalt liegt.

15. Verwendung einer mit dem Verfahren nach einem der Ansprüche 1 bis 10 hergestellten Proteinzutat als Ersatz eines Anteils an tierischen Proteinen in Futtermitteln.

16. Verwendung einer mit dem Verfahren nach einem der Ansprüche 1 bis 10 hergestellten Proteinzutat alleine oder in Verbindung mit weiteren Pflanzenproteinen als Hauptproteinquelle in Futtermitteln für karnivore Tiere.

## Claims

1. A method for obtaining protein ingredients for animal feed from seeds of sunflowers or rape, with at least the following steps
- shelling the sunflower seeds or rapeseeds up to a shell content of <2.5 wt% to obtain shelled sunflower seeds or rapeseeds, or providing shelled sunflower seeds or rapeseeds having a shell content of <2.5 wt%;
- mechanical partial extraction of the oil from the shelled sunflower seeds or rapeseeds by pressing up to a fat or oil content in the range between >6 and <25 wt%;
- carrying out at least one extraction step for further extraction of the oil from the sunflower seeds or rapeseeds with at least one organic solvent or supercritical CO2 up to an oil content of less than 3.5 wt%, and
- subsequent desolventing, whereby a protein-containing product is obtained as a protein ingredient for animal feed,
- wherein at least one protein-denaturing treatment of the sunflower seeds or rapeseeds is carried out between the shelling of the sunflower seeds or rapeseeds and obtaining the protein ingredient in such manner that proteins contained in the protein ingredient are denatured to a percentage of >40 %.

2. The method according to Claim 1,
**characterized in that**
the protein-denaturing treatment is carried out by means of a temperature-time load in which proteins of the sunflower seeds or rapeseeds are exposed to a temperature higher than 90 °C, preferably >100 °C, and below 150 °C for at least 10 minutes (advantageously for over 30 minutes).

3. The method according to Claim 1 or 2,
**characterized in that**
the mechanical partial extraction of oil from the shelled sunflower seeds or rapeseeds is carried out by pressing at an average temperature of the shelled sunflower seeds or rapeseeds of less than 80 °C over the duration of the pressing operation, and the at least one extraction step is also carried out at a temperature below 80 °C,
and that the protein-denaturing treatment is effected by a high temperature of >100 °C during the desolventing.

4. The method according to Claim 1 or 2,
**characterized in that**
the protein-denaturing treatment is carried out by means of an aqueous-alcoholic treatment of proteins of the sunflower seeds or rapeseeds at a mass ratio of alcohol and water between 1:20 and 20:1 and a temperature above 40 °C.

5. The method according to any one of Claims 1, 2 and 4,
**characterized in that**
the mechanical partial extraction of oil from the shelled sunflower seeds or rapeseeds is carried out by pressing at an average temperature of the shelled sunflower seeds or rapeseeds of less than 80 °C over the duration of the pressing operation, the at least one extraction step is carried out at a temperature below 80 °C, and the desolventing takes place at a temperature below 100 °C, and that after the desolventing a treatment of proteins of the sunflower seeds or rapeseeds with an alcohol-water mixture is carried out and then the proteins are brought to a temperature >100 °C.

6. The method according to any one of Claims 1 to 4,
**characterized in that**
the desolventing is carried out by distillation separation of the solvent, particularly with the introduction of heat by means of one or more superheated organic solvents and/or by the use of water vapour.

7. The method according to any one of Claims 1 to 4 or 6,
**characterized in that**
a temperature of > 90 °C, preferably > 100 °C, and below 150 °C is chosen for the desolventing.

8. The method according to any one of Claims 1 to 7,
**characterized in that**
the mechanical partial extraction of oil is carried out in such manner that a temperature of the shelled sunflower seeds or rapeseeds rises above a value of 75 °C during the mechanical partial extraction of oil.

9. The method according to any one of Claim 8,
**characterized in that**
the temperature is chosen at such a value that a press cake obtained by the mechanical partial extraction of oil has a fracture pressure greater than 10 N/mm².

10. The method according to any one of Claims 1 to 9,
**characterized in that**
a mechanical treatment of a press cake obtained by the mechanical partial extraction of oil is performed between the mechanical partial extraction of oil and the at least one extraction step.

11. A protein ingredient for animal feeds which is obtained from proteins of rapeseeds and has
- a solvent content, particularly a hexane content, between 0.0001 and 2 wt% and/or an alcohol content between 0.0001 and 2 wt%,
- a protein content of >45 wt% and <80 wt%,
- a fat content of <3.5 wt%,
- a protein solubility of <40 %,
- a shell content less than 5 wt%, advantageously <2 wt%, particularly advantageously <0.5 wt%,
- a denaturing of >40 % of the proteins, and
- a digestibility of >60 % of the proteins, determined according to the method specified in the description and related NRC recommendations.

12. A protein ingredient for animal feeds which is obtained from proteins of sunflower seeds and has
- a solvent content, particularly hexane content, between 0.0001 and 2 wt% and/or an alcohol content between 0.0001 and 2 wt%,
- a protein content of >45 wt% and <80 wt%,
- a fat content of <3.5 wt%,
- a protein solubility of <30%,
- a shell content less than 5 wt%, advantageously <2 wt%, particularly advantageously <0.5 wt%,
- a denaturing of >40 % of the proteins, and
- a digestibility of >70 % of the proteins, determined according to the method specified in the description and related NRC recommendations.

13. A protein ingredient for animal feeds which contains a mixture of soya proteins with a protein ingredient according to Claim 12.

14. The protein ingredient according to Claim 13,
**characterized in that**
a protein mixture ratio between the soya proteins and the proteins of the protein ingredient lies between 1:10 and 10:1, advantageously between 30:70 and 70:30, particularly advantageously at 50:50 relative to the protein content.

15. Use of a protein ingredient produced with the method according to any one of Claims 1 to 10 as a substitute for a content of animal proteins in animal feeds.

16. Use of a protein ingredient produced with the method according to any one of Claims 1 to 10 alone or in conjunction with other plant proteins as a primary source of protein in animal feeds for carnivorous animals.

## Revendications

1. Procédé d'obtention de compléments protéiques pour l'alimentation animale issus graines de tournesol ou de colza, avec au moins les étapes suivantes :
- épluchage dess graines de tournesol ou de colza jusqu'à une teneur en coques < 2,5% en masse pour obtenir des graines de tournesol ou de colza décortiquées, ou fournir des graines de tournesol ou de colza décortiquées avec une teneur en coque < 2,5% en masse ;
- déshuilage partiel mécanique des graines de tournesol ou de colza épluché par pressage jusqu'à obtenir une teneur en graisse ou huile comprise entre >6 et <25% en masse ;
- exécution d'au moins une étape d'extraction pour un déshuilage ultérieur des graines de tournesol ou de colza avec au moins un solvant organique ou au-dessus du C02 critique jusqu'à une teneur en huile inférieure à 3,5% en masse et
- désolvantisation ultérieure, ce qui donne un produit contenant des protéines comme complément protéique pour l'alimentation animale,
- dans lequel entre l'épluchage des graines de tournesol ou de colza et la conservation du complément protéique au moins un traitement de dénaturation des protéines des graines de tournesol ou colza est réalisé de telle sorte que les protéines contenues dans le complément protéique soient dénaturées dans une proportion > 40 %.

2. Procédé selon la revendication 1, **caractérisé en ce que** le traitement de dénaturation des protéines se produit par un stress température-temps, auquel les protéines des graines de tournesol ou de colza sont exposées à une température supérieure à 90°C, de préférence > 100°C, et inférieure à 150°C pendant au moins 10 minutes (avantageusement pendant plus de 30 minutes).

3. Procédé selon la revendication 1 ou 2, **caractérisé en ce que** la partie mécanique du déshuilage des graines de tournesol ou de colza épluchées est réalisée par pressage à une température moyenne des graines de tournesol ou de colza épluchées pendant la durée du processus de pressage inférieure à 80°C et également au moins une étape d'extraction à une température inférieure à 80°C, et que le traitement de dénaturation des protéines est effectué à une température élevée > 100 °C pendant la désolvantisation.

4. Procédé selon la revendication 1 ou 2, **caractérisé en ce que** le traitement de dénaturation des protéines est réalisé par un traitement hydroalcoolique des protéines des graines de tournesol ou de colza en rapport massique d'alcool et d'eau compris entre 1:20 et 20:1 et une température supérieure à 40°C.

5. Procédé selon une des revendications 1, 2 et 4, **caractérisé en ce que** le déshuilage mécanique partiel des graines de tournesol ou colza épluchées a lieu par pressage à température moyenne des graines de tournesol ou de colza épluchées sur la durée du processus de pressage inférieure à 80°C, au moins une étape d'extraction a lieu à une température inférieure à 80°C et la désolvantisation a lieu à une température inférieure à 100°C, et **en ce que** après la désolvantisation, un traitement des protéines des graines de tournesol ou de colza a lieu avec un mélange alcool-eau moins et qu'ensuite, les protéines sont amenées à une température > 100°C.

6. Procédé selon une des revendications 1 à 4, **caractérisé en ce que** la désolvantisation s'effectue par séparation du solvant par distillation, notamment avec apport de chaleur à l'aide d'un ou plusieurs solvants organiques surchauffés et/ou en utilisant de la vapeur d'eau.

7. Procédé selon une des revendications 1 à 4 ou 6, **caractérisé en ce que** une température > 90°C, de préférence > 100°C, et inférieure à 150°C est sélectionnée pour la désolvantisation.

8. Procédé selon une des revendications 1 à 7, **caractérisé en ce que** le déshuilage mécanique partiel est réalisé de telle sorte qu'une température des graines de tournesol ou de colza épluchées pendant le déshuilage mécanique dépasse une valeur de 75°C.

9. Procédé selon la revendication 8, **caractérisé en ce que** la température est choisie si élevée qu'un gâteau de presse obtenu par déshuilage mécanique des pièces présente une pression de rupture supérieure à 10 N/mm².

10. Procédé selon une des revendications 1 à 9, **caractérisé en ce que** entre le déshuilage partiel mécanique et la au moins une étape d'extraction, on procède au traitement d'un gâteau de presse obtenu par déshuilage partiel mécanique.

11. Complément protéique pour l'alimentation animale, qui est issu de protéines de graines de colza et présente
- une teneur en solvant, notamment en hexane, comprise entre 0,0001 et 2% en masse et/ou une teneur en alcool comprise entre 0,0001 et 2% en masse,
- une teneur en protéines > 45 % en masse et < 80 % en masse,
- une teneur en matières grasses <3,5 % en masse,
- une solubilité des protéines < 40% et
- une teneur en coques inférieure à 5 % en masse., de préférence < 2% en masse et de manière particulièrement préférée < 0,5% en masse,
- une dénaturation des protéines > 40% et
- une digestibilité des protéines > 60% déterminée selon le procédé précisé dans la description et les recommandations NRC associées.

12. Complément protéique pour l'alimentation animale, qui est fabriqué à partir de protéines issues de graines de tournesol et présente
- une teneur en solvants, notamment en hexane comprise entre 0,0001 et 2% en masse et/ou une teneur en alcool comprise entre 0,0001 et 2% en masse, u
- une teneur en protéines > 45% en masse et < 80% en masse,
- une teneur en matières grasses < 3,5% en masse,
- une solubilité des protéines < 30% en masse,
- une teneur en coques inférieure à 5% en masse, de préférence <2% en masse, de manière particulièrement préférée < 0,5% en masse,
- une dénaturation des protéines > 40% et
- une digestibilité des protéines > 70% déterminée selon le procédé précisé dans la description et les recommandations NRC associées.

13. Complément protéique pour l'alimentation animale, qui contient un mélange de protéines de soja avec un complément protéique selon la revendication 12.

14. Complément protéique selon la revendication 13, **caractérisé en ce qu'**un rapport de mélange de protéines entre les protéines de soja et les protéines du complément protéique est compris entre 1:10 et 10:1, de préférence entre 30:70 et 70:30, de manière particulièrement préférée se situe à 50:50 par rapport à la teneur en protéines.

15. Utilisation d'un complément protéique fabriqué avec le procédé selon une des revendications 1 à 10 en remplacement d'une proportion de protéines animales dans les aliments pour animaux.

16. Utilisation d'un complément protéique fabriqué avec le procédé selon une des revendications 1 à 10 seul ou en conjonction avec d'autres protéines végétales comme principale source de protéines dans l'alimentation des animaux carnivores.
